# EUROPÄISCHE PATENTSCHRIFT

(11) **EP 1 165 953 B1**
(45) Veröffentlichungstag und Bekanntmachung des Hinweises auf die Patenterteilung: **07.05.2003**
(21) Anmeldenummer: 00918678.4
(22) Anmeldetag: 25.02.2000
(51) Int. Cl.: F02D 41/40, F02D 41/06

(54) **VERFAHREN ZUM BETREIBEN EINER BRENNKRAFTMASCHINE**
METHOD OF OPERATING AN INTERNAL COMBUSTION ENGINE
PROCEDE PERMETTANT DE FAIRE FONCTIONNER UN MOTEUR A COMBUSTION INTERNE

(30) Priorität: 25.03.1999 DE 19913407
(43) Veröffentlichungstag der Anmeldung: 02.01.2002
(73) Patentinhaber: ROBERT BOSCH GMBH, 70442 Stuttgart (DE)
(72) Erfinder: MEZGER, Werner, D-74246 Eberstadt (DE); SCHUSTER, Thomas, D-71573 Allmersbach (DE); ROTH, Andreas, D-75417 Muehlacker-Lomersheim (DE); GRASS, Gerd, D-71701 Schwieberdingen (DE); WEISS, Ruediger, D-71159 Moetzingen (DE)
(86) Internationale Anmeldenummer: DE0000534
(87) Internationale Veröffentlichungsnummer: WO00058618

(56) Entgegenhaltungen:
- EP-A- 0 849 455
- EP-A- 0 849 460
- DE-A- 19 739 786
- PATENT ABSTRACTS OF JAPAN vol. 009, no. 132 (M-385), 7. Juni 1985 (1985-06-07) -& JP 60 013950 A (TOYOTA JIDOSHA KK), 24. Januar 1985 (1985-01-24)

## Beschreibung

### Stand der Technik

Die Erfindung geht aus von einem Verfahren zum Betreiben einer Brennkraftmaschine insbesondere eines Kraftfahrzeugs, bei dem Kraftstoff in mindestens zwei Betriebsarten in einen Brennraum eingespritzt wird, wobei die Einspritzung einen Einspritzbeginnwinkel und eine Einspritzdauer aufweist, wobei aus dem Einspritzbeginnwinkel und der Einspritzdauer ein Einspritzendewinkel ermittelt wird, wobei überprüft wird, ob ein Einspritzabbruchwinkel von dem Einspritzendewinkel überschritten wird, wobei, falls der Einspritzabbruchwinkel überschritten wird, ein geänderter Einspritzbeginnwinkel derart ermittelt wird, dass der Einspritzabbruchwinkel gerade nicht mehr überschritten wird, und wobei die Einspritzung bei dem geänderten Einspritzwinkel begonnen wird. Die Erfindung betrifft ebenfalls eine entsprechende Brennkraftmaschine insbesondere für ein Kraftfahrzeug.

Ein derartiges Verfahren und eine derartige Brennkraftmaschine sind beispielsweise aus der EP-A-0 849 460 bekannt.

Bei einer sogenannten Benzin-Direkteinspritzung wird Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Das Starten der Brennkraftmaschine wird im Homogenbetrieb durchgeführt. Insbesondere bei einem Kaltstart ist es möglich, dass aufgrund des noch geringen, auf den Kraftstoff einwirkenden Drucks eine relativ lange Einspritzdauer erforderlich ist, um die erwünschte Kraftstoffmasse in den Brennraum einzuspritzen und die Brennkraftmaschine zuverlässig zu starten. Dies kann dazu führen, dass die Brennkraftmaschine bereits von der Ansaugphase in die Verdichtungsphase übergeht, und dass der daraufhin in dem Brennraum entstehende Druck größer wird als der auf den Kraftstoff einwirkende Druck. In diesem Fall würde der Kraftstoff und Gas von dem Brennraum wieder zurückgeblasen werden, was in jedem Fall vermieden werden muss.

Aufgabe der Erfindung ist es, ein Verfahren zum Betreiben einer Brennkraftmaschine zu schaffen, mit dem ein sicheres Starten auch bei einem Kaltstart durchführbar ist.

Diese Aufgabe wird bei einem Verfahren der eingangs genannten Art erfindungsgemäß dadurch gelöst, dass die Veränderung des Einspritzbeginnwinkels auf einen insbesondere motortemperaturabhängigen Grenzwinkel beschränkt wird.

Durch die Ermittlung des Einspritzendewinkels ist es möglich, dass dieser mit dem Einspritzabbruchwinkel verglichen wird. Aus diesem Vergleich kann dann abgeleitet werden, ob die vorgesehene Einspritzung den Einspritzabbruchwinkel überschreiten würde oder nicht. In Abhängigkeit davon kann dann entschieden werden, ob irgendwelche Maßnahmen erforderlich sind, wie die vorgesehene Kraftstoffmasse in den Brennraum eingespritzt werden kann, ohne dass Kraftstoff und Gas aus dem Brennraum zurückgeblasen wird.

Die Erfindung eröffnet somit die Möglichkeit, die erwünschte Kraftstoffmasse einzuspritzen und trotzdem ein Zurückblasen von Kraftstoff sicher zu vermeiden. Das erfindungsgemäße Vorgehen ist dabei unter allen Betriebsbedingungen der Brennkraftmaschine und damit auch bei einem Kaltstart anwendbar. Damit wird durch die Erfindung ein sicheres Starten der Brennkraftmaschine unter allen Bedingungen erreicht.

An dieser Stelle wird betont, dass jedem der vorstehend genannten Winkel, wie auch jedem der nachfolgend beschriebenen Winkel eine zugehörige Zeitdauer zugeordnet ist. Sämtliche Winkel könnten also durch entsprechende Zeitdauern ersetzt werden. Die Umrechnung ist dabei abhängig von der Drehzahl der Brennkraftmaschine.

Falls der Einspritzabbruchwinkel überschritten wird, so ist es bei der Erfindung vorgesehen, dass ein geänderter Einspritzbeginnwinkel derart ermittelt wird, dass der Einspritzabbruchwinkel gerade nicht mehr überschritten wird, und dass die Einspritzung bei dem geänderten Einspritzbeginnwinkel begonnen wird. Auf diese Weise wird gewährleistet, dass bei etwa gleichbleibender Drehzahl die Einspritzung in keinem Fall den Einspritzabbruchwinkel überschreitet. Damit wird einerseits ein Zurückblasen von Kraftstoff aus dem Brennraum sicher vermieden. Andererseits wird ebenfalls vermieden, dass die Einspritzung von Kraftstoff frühzeitig beendet und damit zu wenig Kraftstoff in den Brennraum eingespritzt wird. Insbesondere letzteres ist für ein zuverlässiges Starten der Brennkraftmaschine wesentlich.

Durch die erfindungsgemäße Beschränkung des Einspritzbeginnwinkels auf einen Grenzwinkel wird erreicht, dass der Einspritzbeginn nicht beliebig nach "früh" verändert werden kann, sondern dass ein frühestmöglicher Einspritzbeginn in jedem Fall eingehalten wird.

Bei einer vorteilhaften Weiterbildung der Erfindung wird der Einspritzbeginnwinkel nach "früh" verändert. Besonders vorteilhaft ist es, wenn der Einspritzbeginnwinkel ausgehend von dem Einspritzabbruchwinkel um die Einspritzdauer nach "früh" verändert wird. Erfindungsgemäß wird also die Einspritzung genau dann begonnen, wenn die verbleibende Zeitdauer bis zu dem Abbruch der Einspritzung gerade der Einspritzdauer entspricht. Die Einspritzung ist damit genau im Zeitpunkt des vorgesehenen Abbruchs bzw. an dem Einspritzabbruchwinkel beendet.

Falls der Einspritzabbruchwinkel nicht überschritten wird, ist es bei der Erfindung besonders vorteilhaft, wenn die Einspritzung bei dem Einspritzbeginnwinkel begonnen wird.

In diesem Fall, der nicht die Gefahr eines Zurückblasens von Kraftstoff aus dem Brennraum in sich birgt, wird der Einspritzbeginnwinkel also nicht verändert. Die vorgesehene Kraftstoffmasse wird also vor dem Einspritzabbruchwinkel in den Brennraum eingespritzt.

Besonders vorteilhaft ist die Anwendung der Erfindung in einer ersten Betriebsart, bei der der Kraftstoff während der Ansaugphase in den Brennraum der Brennkraftmaschine eingespritzt wird. Diese Betriebsart stellt den Homogenbetrieb dar.

Ebenfalls ist es besonders vorteilhaft, wenn die Erfindung bei einem auf den Kraftstoff einwirkenden Druck, der kleiner ist als ein Grenzdruck, angewendet wird. Damit kann erreicht werden, dass nur dann eine Veränderung des Einspritzbeginnwinkels möglich ist, wenn der auf den Kraftstoff einwirkende Druck klein ist, und damit bei einem Abbruch ggf. zu wenig Kraftstoff für einen zuverlässigen Betrieb der Brennkraftmaschine eingespritzt würde. Bei einem hohen, auf den Kraftstoff einwirkenden Druck sind die Einspritzzeiten so kurz, dass kein Abbruch mehr auftreten kann. Die ganzen Berechnungen werden dann nicht mehr ausgeführt, um Rechenzeit zu sparen.

Eine besonders vorteilhafte Ausgestaltung der Erfindung besteht in deren Anwendung beim Starten der Brennkraftmaschine. Beim Starten, insbesondere bei einem Kaltstart, ist der Druck auf den Kraftstoff gering. Gleichzeitig muss eine große Menge Kraftstoff in den Brennraum eingespritzt werden, um ein zuverlässiges Starten der Brennkraftmaschine zu gewährleisten. Ein Abbruch der Einspritzung könnte deshalb beim Starten zu einem Absterben der Brennkraftmaschine führen. Aus diesem Grund ist es besonders vorteilhaft, beim Starten der Brennkraftmaschine einen Abbruch einer Einspritzung zu verhindern und statt dessen die erfindungsgemäße Veränderung des Einspritzbeginnwinkels durchzuführen. Damit wird einerseits erreicht, dass die vorgesehene Kraftstoffmasse auch vollständig in den Brennraum eingespritzt werden kann, wobei andererseits gleichzeitig ein Zurückblasen von Kraftstoff aus dem Brennraum sicher vermieden wird.

Das erfindungsgemäße Verfahren kann mit Hilfe eines Steuerelements ausgeführt werden, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. Als Steuerelement kann insbesondere ein.elektrisches Speichermedium zur Anwendung kommen, beispielsweise ein Read-Only-Memory.

Weitere vorteilhafte Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.
- Figur 1: zeigt ein schematisches Blockschaltbild eines Ausführungsbeispiels einer erfindungsgemäßen Brennkraftmaschine, und
- Figur 2: zeigt ein schematisches Blockschaltbild eines Ausführungsbeispiels eines erfindungsgemäßen Verfahrens zum Betreiben der Brennkraftmaschine der Figur 1.

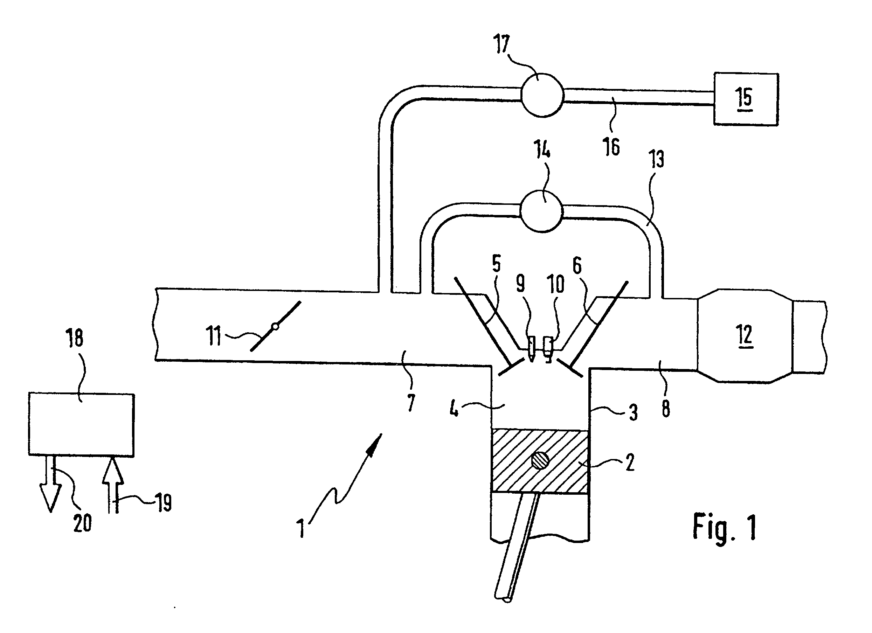

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Von dem Abgasrohr 8 führt eine Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann.

Von einem Kraftstofftank 15 führt eine Tankentlüftungsleitung 16 zu dem Ansaugrohr 7. In der Tankentlüftungsleitung 16 ist ein Tankentlüftungsventil 17 untergebracht, mit dem die Menge des dem Ansaugrohr 7 zugeführten Kraftstoffdampfes aus dem Kraftstofftank 15 einstellbar ist.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Steller das Verhalten der Brennkraftmaschine 1 beeinflusst werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb im Wesentlichen von der Stellung der Drosselklappe 11 ab. Im Hinblick auf eine geringe Schadstoffentwicklung wird das Kraftstoff/Luft-Gemisch möglichst auf Lambda = 1 oder Lambda < 1 eingestellt.

In einer zweiten Betriebsart, einem sogenannten homogenen Magerbetrieb der Brennkraftmaschine 1, wird der Kraftstoff wie bei dem Homogenbetrieb während der Ansaugphase in den Brennraum 4 eingespritzt. Im Unterschied zu dem Homogenbetrieb kann das Kraftstoff/Luft-Gemisch jedoch auch mit Lambda > 1 auftreten.

In einer dritten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen.

Gegebenenfalls sind auch noch weitere Betriebsarten denkbar.

Zwischen den beschriebenen Betriebsarten der Brennkraftmaschine 1 kann hin- und her- bzw. umgeschaltet werden. Derartige Umschaltungen werden von dem Steuergerät 18 durchgeführt. Die Auslösung einer Umschaltung erfolgt durch einen Betriebszustand der Brennkraftmaschine 1 bzw. durch dessen ausführende Funktion des Steuergeräts 18.

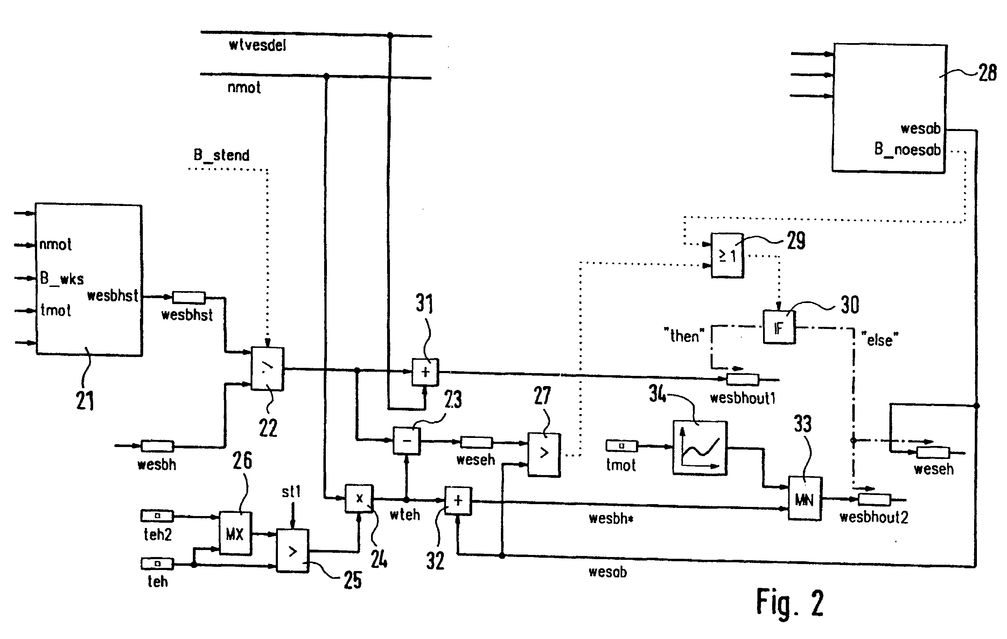

Zum Starten wird die Brennkraftmaschine 1 in der ersten Betriebsart, dem Homogenbetrieb betrieben. Dies ist bei den in der Figur 2 enthaltenen Signalen durch ein "h" gekennzeichnet.

In der Figur 2 ist ein Verfahren dargestellt, das von dem Steuergerät 18 ausgeführt werden kann, und das dazu geeignet ist, das Starten der Brennkraftmaschine 1 zu steuern und/oder zu regeln. Die in der Figur 2 dargestellten Blöcke sind in dem Steuergerät 18 durch Programme repräsentiert.

Ein Block 21 ist dazu vorgesehen, einen Einspritzbeginnwinkel wesbhst für das Starten der Brennkraftmaschine 1 zu ermitteln. Dieser Einspritzbeginnwinkel wesbhst wird von dem Block 21 unter anderem in Abhängigkeit von der Drehzahl nmot der Brennkraftmaschine 1, von einem Bit B_wks, mit dem eine Wiederholung eines Kaltstarts gekennzeichnet ist, sowie von der Temperatur tmot der Brennkraftmaschine 1 erzeugt.

Der Einspritzbeginnwinkel wesbhst für das Starten ist einem Umschalter 22 zugeführt, der des weiteren mit einem Einspritzbeginnwinkel wesbh für den normalen Betrieb der Brennkraftmaschine 1 beaufschlagt ist. Der Umschalter 22 wird von einem Bit B_stend gesteuert, das das Ende eines Startvorgangs charakterisiert. Während des Startens der Brennkraftmaschine 1 befindet sich der Umschalter 22 aufgrund des Bits B_stend in der in der Figur 2 dargestellten Schaltstellung. Es wird von dem Umschalter damit beim Starten der Einspritzbeginnwinkel wesbhst für das Starten weitergegeben.

Durch einen Block 23 wird von dem Einspritzbeginnwinkel wesbhst ein Einspritzdauerwinkel wteh subtrahiert. An dieser Stelle wird darauf hingewiesen, dass im Zusammenhang mit Winkeln oder Zeitdauern der Einspritzung immer in Richtung "früh" gerechnet wird. Eine Subtraktion bedeutet also letztlich, dass z.B. zu dem Einspritzbeginnwinkel der Einspritzdauerwinkel im zeitlichen Ablauf hinzugefügt wird. Ebenfalls wird darauf hingewiesen, dass Winkel und Zeitdauern über die Drehzahl nmot der Brennkraftmaschine ineinander umgerechnet werden können.

Der Einspritzdauerwinkel wteh wird aus der Einspritzdauer teh ermittelt. Zu diesem Zweck wird die Einspritzdauer teh mit der Drehzahl nmot der Brennkraftmaschine 1 in einem Block 24 multipliziert.

Zusätzlich kann eingestellt werden, dass die Einspritzdauer teh einen Minimalwert teh2 nicht unterschreiten kann. Hierzu muss mit Hilfe eines Steuersignals st1 ein Umschalter 25 in die in der Figur 2 nicht dargestellte Schalterstellung umgeschaltet werden. Dann wird aufgrund einer zwischengeschalteten Maximalwertstufe 26 zumindest der Minimalwert teh2 weitergegeben, selbst wenn die Einspritzdauer teh kleiner ist.

Durch die Subtraktion des Einspritzdauerwinkels wteh von dem Einspritzbeginnwinkel wesbhst ist am Ausgang des Blocks 23 ein Einspritzendewinkel weseh vorhanden. Dieser Einspritzendewinkel weseh wird in einem Block 27 mit einem Einspritzabbruchwinkel wesab verglichen. Der Vergleich erfolgt dadurch, dass überprüft wird, ob der Einspritzendewinkel weseh größer ist als der Einspritzabbruchwinkel wesab.

Der Einspritzabbruchwinkel wesab wird von einem Block 28 in Abhängigkeit von einer Mehrzahl von Betriebsgrößen der Brennkraftmaschine 1 ermittelt. Der Einspritzabbruchwinkel wesab stellt denjenigen Winkel dar, bei dem spätestens eine Einspritzung beendet werden muss, da ansonsten die Gefahr besteht, dass der Kraftstoff von dem Brennraum 4 in die Einspritzdüsen 9 zurückgeblasen wird.

Diese Gefahr besteht insbesondere bei einem Kaltstart der Brennkraftmaschine 1, bei dem der auf den Kraftstoff einwirkende Druck noch gering ist. Aufgrund des geringen Drucks ist eine große Zeitdauer erforderlich, um die erwünschte Kraftstoffmasse in den Brennraum einzuspritzen. Aufgrund dieser großen Zeitdauer ist es möglich, dass die Einspritzung über die Ansaugphase hinaus bis in die Verdichtungsphase andauert. Dort kann dann der in dem Brennraum 4 aufgebaute Verdichtungsdruck größer werden als der auf den Kraftstoff von seiten der Einspritzdüsen 9 einwirkende Druck, so dass der Kraftstoff und Gas - wie erwähnt - in die Einspritzdüsen 9 zurückgeblasen wird.

Ist der Einspritzendewinkel weseh größer als der Einspritzabbruchwinkel wesab, ist also die "größer als"-Bedingung des Blocks 27 erfüllt, so erzeugt der Block 27 eine "1". Dieser Fall ist dann gegeben, wenn im tatsächlichen zeitlichen Ablauf die Einspritzung vor dem Einspritzabbruchwinkel wesab beendet wird, wenn also der Einspritzendewinkel weseh den Einspritzabbruchwinkel wesab nicht überschreitet.

Die von dem Block 27 erzeugte "1" wird über eine ODER-Verknüpfung 29 an einen Block 30 weitergegeben. Dabei ist es aufgrund der anliegenden "1" unerheblich, welches Signal an dem anderen Eingang der ODER-Verknüpfung 29 vorhanden ist.

Bei dem Block 30 handelt es sich um eine "if-then-else"-Funktion. Liegt eine "1" an dem Block 30 an, so wird die "then"-Funktion ausgeführt, andernfalls die "else"-Funktion.

Aufgrund der anliegenden "1" wird von dem Block 30 die in der Figur 2 mit "then" gekennzeichnete Funktion freigegeben. Dies bedeutet, dass ein auszugebender Einspritzbeginnwinkel wesbhout1 zur Verfügung gestellt wird, der den an das entsprechende Einspritzventil 9 auszugebenden Winkel des Einspritzbeginns darstellt.

Der Einspritzbeginnwinkel wesbhout1 wird von einem Block 31 durch eine Addition des Einspritzbeginnwinkels wesbhst und eines Signals wtvesdel erzeugt. Bei dem Signal wtvesdel handelt es sich um einen Winkelbereich, innerhalb dem das Einspritzventil 9 vormagnetisiert wird. Um diesen Winkelbereich wird der Einspritzbeginnwinkel wesbhst in der tatsächlichen zeitlichen Abfolge nach "früh" verschoben.

Bei der zuvor beschriebenen "then"-Funktion handelt es sich, wie bereits erwähnt, um denjenigen Fall, bei dem der Einspritzendewinkel weseh nicht den Einspritzabbruchwinkel wesab überschreitet.

Ist jedoch der Einspritzendewinkel weseh kleiner als der Einspritzabbruchwinkel wesab, ist also die "größer als"-Bedingung des Blocks 27 nicht erfüllt, so erzeugt der Block 27 eine "0". Dieser Fall ist dann gegeben, wenn im tatsächlichen zeitlichen Ablauf die Einspritzung nach dem Einspritzabbruchwinkel wesab beendet würde, wenn also der Einspritzendewinkel weseh den Einspritzabbruchwinkel wesab überschreiten würde.

Ist in diesem Fall zusätzlich das an dem anderen Eingang der ODER-Verknüpfung 29 anliegende Signal ebenfalls "0", so wird von dem Block 30 die in der Figur 2 mit "else" gekennzeichnete Funktion freigegeben. Dies bedeutet, dass ein auszugebender Einspritzbeginnwinkel wesbhout2 sowie der Einspritzendewinkel weseh zur Verfügung gestellt wird. Der Einspritzbeginnwinkel wesbhout2 stellt dabei wie der Einspritzbeginnwinkel wesbhout1 den an das entsprechende Einspritzventil 9 auszugebenden Winkel des Einspritzbeginns dar.

Der Einspritzbeginnwinkel wesbhout2 wird von einem Block 32 erzeugt. Hierzu addiert der Block 32 den Einspritzdauerwinkel wteh und den Einspritzabbruchwinkel wesab. Diese Addition bedeutet, dass im tatsächlichen zeitlichen Verlauf ausgehend von dem Einspritzabbruchwinkel wesab nach "früh" gerechnet wird. Das Ergebnis der Addition stellt einen Einspritzbeginnwinkel wesbh* dar, der gerade so gewählt ist, dass der vorgesehene Einspritzdauerwinkel wteh bei etwa gleichbleibender Drehzahl in jedem Fall keine Überschreitung des Einspritzabbruchwinkels wesab zur Folge hat. Letztlich wird in diesem Fall die Einspritzung genau an dem Einspritzabbruchwinkel wesab beendet.

Der Einspritzbeginnwinkel wesbh* ist einer Minimalwertauswahl 33 zugeführt, die des weiteren ein Eingangssignal von einer motortemperaturabhängigen Kennlinie 34 erhält, das einen Maximalwert für den Einspritzbeginnwinkel wesbhout2 ausgibt. Damit entspricht der Einspritzbeginnwinkel wesbhout2 entweder dem Einspritzbeginnwinkel wesbh*, sofern dieser kleiner ist als der von der Kennlinie 34 erzeugte Maximalwert, oder der Einspritzbeginnwinkel wesbhout2 entspricht diesem Maximalwert und damit einem maximal "frühen" Grenzwinkel für den Einspritzbeginn im Sinne des tatsächlichen zeitlichen Ablaufs.

An dieser Stelle soll nochmals erwähnt werden, dass entsprechend der "if-then-else"-Funktion des Blocks 30 immer nur entweder der Einspritzbeginnwinkel wesbhout 1 oder der Einspritzbeginnwinkel wesbhout2 erzeugt und an das entsprechende Einspritzventil 9 ausgegeben wird.

Wenn an den beiden Eingängen der ODER-Verknüpfung 29 jeweils eine "0" anliegt, so wird, wie erwähnt, im Rahmen der "else"-Funktion auch der Einspritzendewinkel weseh erzeugt. Entsprechend der Figur 2 wird der Einspritzendewinkel weseh mit dem Einspritzabbruchwinkel wesab gleichgesetzt. Damit wird erreicht, dass als Einspritzendewinkel weseh nicht mehr der den Einspritzabbruchwinkel wesab überschreitende Wert vorhanden ist, der letztlich zu der Veränderung des Einspritzbeginns und damit des Einspritzbeginnwinkels wesbhout2 geführt hat, sondern dass der korrekte Wert des Einspritzendes als Einspritzendewinkel weseh vorhanden ist, nämlich der Wert des Einspritzabbruchwinkels wesab.

Außer dem Ausgangssignal des Blocks 27 liegt an der ODER-Verknüpfung 29 ein bereits erwähntes weiteres Signal an. Bei diesem Signal handelt es sich um ein Bit B_noesab, das von dem Block 28 in Abhängigkeit von einer Mehrzahl von Betriebsgrößen der Brennkraftmaschine 1 erzeugt wird. Das Bit B_noesab zeigt an, ob ein Abbruch der Einspritzung erlaubt ist oder nicht.

Das Bit B_noesab ist "0", wenn ein Abbruch der Einspritzung erlaubt ist. In diesem Fall hat das Bit B_noesab, wie erläutert wurde, keinen Einfluss auf die ODER-Verknüpfung 29. Die "if-then-else"-Funktion wird damit einzig in Abhängigkeit von dem Ausgangssignal des Blocks 27 angesteuert. Dies hat zur Folge, dass der Einspritzbeginn bei etwa gleichbleibender Drehzahl immer gerade so verändert wird, dass kein Abbruch der Einspritzung erfolgt.

Das Bit B_noesab ist jedoch "1", wenn ein Abbruch der Einspritzung nicht erlaubt ist. Dies ist z.B. bei einem einen Grenzdruck überschreitenden, auf den Kraftstoff auf seiten der Einspritzdüsen 9 einwirkenden Druck der Fall. Durch diese "1" des Bits B_noesab ist das Ausgangssignal der ODER-Verknüpfung 29 unabhängig von dem Ausgangssignal des Blocks 28 in jedem Fall auch "1", so dass von dem Block 30 in jedem Fall die "then"-Funktion ausgeführt wird. Damit wird keine Veränderung des Einspritzbeginnwinkels wesbhout1 nach "früh" durchgeführt.

## Patentansprüche

1. Verfahren zum Betreiben einer Brennkraftmaschine (1) insbesondere eines Kraftfahrzeugs, bei dem Kraftstoff in mindestens zwei Betriebsarten in einen Brennraum (4) eingespritzt wird, wobei die Einspritzung einen Einspritzbeginnwinkel (wesbhst) und eine Einspritzdauer (teh) aufweist, wobei aus dem Einspritzbeginnwinkel (wesbhst) und der Einspritzdauer (teh) ein Einspritzendewinkel (weseh) ermittelt wird (23), wobei überprüft wird, ob ein Einspritzabbruchwinkel (wesab) von dem Einspritzendewinkel (weseh) überschritten wird (27), wobei, falls der Einspritzabbruchwinkel (wesab) überschritten wird, ein geänderter Einspritzbeginnwinkel (wesbhaout 2) derart ermittelt wird, dass der Einspritzabbruchwinkel (wesab) gerade nicht mehr überschritten wird (32), und wobei die Einspritzung bei dem geänderten Einspritzbeginnwinkel (wesbhout2) begonnen wird, **dadurch gekennzeichnet, dass** die Veränderung des Einspritzbeginnwinkels (wesbhout2) auf einen insbesondere motortemperaturabhängigen Grenzwinkel beschränkt wird (33).

2. Verfahren nach Anspruch 1, **dadurch gekennzeichnet, dass** der Einspritzabbruchwinkel (wesbhout2) nach "früh" verändert wird (32).

3. Verfahren nach einem der Ansprüche 1 oder 2, **dadurch gekennzeichnet, dass** der Einspritzabbruchwinkel (wesbhout 2) ausgehend von dem Einspirtzbeginnwinkel (wesab) um die Einspritzdauer (teh) nach "früh" verändert wird (32).

4. Verfahren nach einem der Ansprüche 1 bis 3, **dadurch gekennzeichnet, dass**, falls der Einspritzabbruchwinkel (wesab) nicht überschritten wird, die Einspritzung bei dem Einspritzbeginnwinkel (wesbhout1) begonnen wird.

5. Verfahren nach einem der vorstehenden Ansprüche, **gekennzeichnet durch** die Anwendung in einer ersten Betriebsart, bei der der Kraftstoff während der Ansaugphase in den Brennraum (4) der Brennkraftmaschine (1) eingespritzt wird.

6. Verfahren nach einem der vorstehenden Ansprüche, **gekennzeichnet durch** die Anwendung bei einem auf den Kraftstoff einwirkenden Druck, der kleiner ist als ein Grenzdruck.

7. Verfahren nach einem der vorstehenden Ansprüche, **gekennzeichnet durch** die Anwendung beim Starten der Brennkraftmaschine (1).

8. Brennkraftmaschine (1) insbesondere für ein Kraftfahrzeug, mit einem Brennraum (4), in den Kraftstoff in mindestens zwei Betriebsarten einspritzbar ist, wobei die Einspritzung einen Einspritzbeginnwinkel und eine Einspritzdauer aufweist, und mit einem Steuergerät (18) zur Steuerung und/oder Regelung, wobei durch das Steuergerät (18) aus dem Einspritzbeginnwinkel (wesbhst) und der Einspritzdauer (teh) ein Einspritzendewinkel (weseh) ermittelbar ist, wobei durch das Steuergerät (18) überprüfbar ist, ob ein Einspritzabbruchwinkel (wesab) von dem Einspritzendewinkel (weseh) überschritten wird, wobei, falls der Einspritzabbruchwinkel (wesab) überschritten wird, durch das Steuergerät (18) ein geänderter Einspritzbeginnwinkel (wesbhout2) derart ermittelbar ist, dass der Einspritzabbruchwinkel (wesab) gerade nicht mehr überschritten wird (32), und wobei die Einspritzung bei dem geänderten Einspritzbeginnwinkel (wesbhout2) begonnen wird, **dadurch gekennzeichnet, dass** die Veränderung des Einspritzbeginnwinkels (wesbhout2) durch das Steuergerät (18) auf einen insbesondere motortemperaturabhängigen Grenzwinkel beschränkt wird (33).

## Claims

1. Method of operating an internal combustion engine (1), in particular of a motor vehicle, in which fuel is injected into a combustion chamber (4) in at least two modes of operation, the injection having an angle (wesbhst) of start of injection and an injection period (teh), an angle (weseh) of end of injection being determined (23) from the angle (wesbhst) of start of injection and the injection period (teh), it being tested whether an angle (wesab) of injection abort is exceeded (27) by the angle (weseh) of end of injection, and if the angle (wesab) of injection abort is exceeded, a changed angle (wesbhaout 2) of start of injection is determined such that the angle (wesab) of injection abort is just no longer exceeded (32), the injection being started at the changed angle (wesbhout2) of start of injection, **characterized in that** the change in the angle (wesbhout2) of start of injection being restricted (33) to a limiting angle which is in particular dependent on the temperature of the engine.

2. Method according to Claim 1, **characterized in that** the angle (wesbhout2) of injection abort is changed (32) in the "advanced" direction.

3. Method according to one of Claims 1 or 2, **characterized in that** the angle (wesbhout2) of injection abort is changed (32) in the "advanced" direction by the injection period (teh) starting from the angle (wesab) of start of injection.

4. Method according to one of Claims 1 to 3, **characterized in that** if the angle (wesab) of injection abort is not exceeded, the injection is started at the angle (wesbhout1) of start of injection.

5. Method according to one of the preceding claims, **characterized by** the application in a first mode of operation in which the fuel is injected into the combustion chamber (4) of the internal combustion engine (1) during the intake phase.

6. Method according to one of the preceding claims, **characterized by** the application in which the pressure acting on the fuel is less than a limiting pressure.

7. Method according to one of the preceding claims, **characterized by** the application when the internal combustion engine (1) starts.

8. Internal combustion engine (1), in particular for a motor vehicle, having a combustion chamber (4) into which fuel can be injected in at least two modes of operation, the injection having an angle of start of injection and an injection period, having a control unit (18) for controlling and/or regulating, it being possible for the control unit (18) to determine an angle (weseh) of end of injection from the angle (wesbhst) of start of injection and the injection period (teh), it being possible for the control unit (18) to check whether an angle (wesab) of injection abort is exceeded by the angle (weseh) of end of injection, if the angle (wesab) of injection abort is exceeded, a changed angle (wesbhout2) of start of injection can be determined by the control unit (18) in such a way that the angle (wesab) of injection abort is just no longer exceeded (32), the injection being started with the changed angle (wesbhout2) of start of injection, **characterized in that** the change in the angle (wesbhout2) of start of injection being restricted (33) by the control unit (18) to a limiting angle which is in particular dependent on the temperature of the engine.

## Revendications

1. Procédé de mise en oeuvre d'un moteur à combustion interne (1) notamment d'un véhicule automobile selon lequel le carburant est injecté dans la chambre de combustion (4) selon au moins deux modes de fonctionnement, l'injection ayant un angle de début d'injection (wesbhst) et une durée d'injection (teh), et
à partir de l'angle de début d'injection (wesbhst) et de la durée d'injection (teh), on détermine un angle de fin d'injection (weseh) (23),
on vérifie si un angle d'arrêt d'injection (wesab) est dépassé par l'angle de fin d'injection (weseh) (27) et si l'angle d'arrêt d'injection (wesab) est dépassé, on détermine un angle de début d'injection modifié (wesbhout2) de façon que l'angle d'arrêt d'injection (wesab) ne soit plus juste dépassé (32), et
on commence l'injection avec l'angle de début d'injection, modifié (wesbhout2),
**caractérisé en ce qu'**
on limite la variation de l'angle de début d'injection (wesbhout2) à un angle limite dépendant notamment de la température du moteur (33).

2. Procédé selon la revendication 1,
**caractérisé en ce qu'**
on modifie l'angle d'arrêt d'injection (wesab) dans le sens de « l'avance » (32).

3. Procédé selon l'une quelconque des revendications 1 ou 2,
**caractérisé en ce que**
partant de l'angle de début d'injection (wesbhout2) on modifie l'angle d'arrêt d'injection (wesab) de la durée d'injection (teh) dans le sens de « l'avance » (32).

4. Procédé selon l'une quelconque des revendications 1 à 3,
**caractérisé en ce qu'**
au cas où l'angle d'arrêt d'injection (wesab) n'est pas dépassé, on commence l'injection à l'angle de début d'injection (wesbhout1).

5. Procédé selon l'une quelconque des revendications précédentes,
**caractérisé par**
l'application à un premier mode de fonctionnement pour lequel le carburant est injecté dans la chambre de combustion (4) du moteur à combustion interne (1) pendant la phase d'aspiration.

6. Procédé selon l'une quelconque des revendications précédentes,
**caractérisé par**
l'application à une pression de carburant inférieure à une pression limite.

7. Procédé selon l'une quelconque des revendications précédentes,
**caractérisé par**
l'application au démarrage du moteur à combustion interne (1).

8. Moteur à combustion interne (1) notamment pour un véhicule comprenant une chambre de combustion (4) dans laquelle on injecte le carburant selon au moins deux modes de fonctionnement,
l'injection ayant un angle de début d'injection et une durée d'injection, et
un appareil de commande (18) pour commander et/ou réguler,
l'appareil de commande (18) déterminant à partir de l'angle de début d'injection (wesbhst) et de la durée d'injection (teh), un angle de fin d'injection (weseh),
l'appareil de commande (18) vérifie si un angle d'arrêt d'injection (wesab) est dépassé par l'angle de fin d'injection (weseh), et au cas où l'angle d'arrêt d'injection (wesab) est dépassé, l'appareil de commande (18) détermine un angle de début d'injection modifié (wesbhout2) de façon que l'angle d'arrêt d'injection (wesab) ne soit juste plus dépassé (32), et
l'injection commence avec l'angle de début d'injection, modifié (wesbhout2),
**caractérisé en ce que**
la modification de l'angle de début d'injection (wesbhout2) est limitée par l'appareil de commande (18) à un angle limite dépendant notamment de la température du moteur (33).
